# EUROPEAN PATENT APPLICATION

(11) **EP 3 247 011 A1**
(43) Date of publication of application: **22.11.2017**
(21) Application number: 16460029.8
(22) Date of filing: 17.05.2016
(51) Int. Cl.: H02B 1/24, H02B 7/06

(54) **MULTIFUNCTIONAL THREE PHASE POWER DISTRUBUTION INDOOR/OUTDOOR UNIT**

(71) Applicant: ABB Schweiz AG, 5400 Baden (CH)
(72) Inventor: GUL, Aleksander, 04-761 Warszawa (PL); DASZKIEWICZ, Robert, 95-060 Brzeziny (PL); KLYS, Pawel, 93-504 Lodz (PL)
(74) Representative: Chochorowska-Winiarska, Krystyna

(57) **Abstract**

The invention relates to a multifunctional three phase power distribution indoor/outdoor unit having the utility in a field of electricity. The power distribution unit can be applied in case local energy generation on LV side and next delivery to MV network and also it is suitable for smart grids network system. The unit comprises a transformer (1) and a MV apparatus unit directly mechanically and electrically connected with the transformer (1). The switching device is formed as a switching box (2) having a housing (3), which housing is mechanically connected to the transformer (1) through a top part (24a) of the frame (24) and a bottom wall (3a) of the housing (3). The frame (24) is mechanically connected with the base (28) of the transformer (1) in such a way that the top part (24a) of the frame (24) has a form of an extension arm standing out partially on the top of the transformer (1) and partially beyond an outline of the transformer (1). Inside the switching box (2) the electrical equipment is placed which comprises: a vacuum circuit breaker (10), three different types of current transformers (7, 9, 27) and a metering voltage transformer (16), disconnector (13), fast acting earthing switch (15) and ZnO arrester (26). After fixing the frame (24) to the base (28) of the transformer (1) the transformer bushings (5) are placed inside the switching box (2), whereas three input LV terminal bushings (29) of the transformer (1) are situated outside the switching box (2).

## Description

The invention relates to a multifunctional three phase power distribution indoor/outdoor unit having the utility in a field of electricity . The unit is used for distribution a locally generated energy based on: natural gas; bio-gas; burning of waste; oil; wind towers; solar farms; low power unit; micro steam-turbine generators. The power distribution unit can be applied in case local energy generation on LV side and next delivery to MV network and also it is suitable for smart grids network system. The unit comprises a distribution transformer electrically connected with an outdoor / indoor switching device.

From European patent No. EP0598130 there is known a distribution apparatus in which a plurality of switches are so connected in series on a main distribution line led out of a receiving switching device as to constitute a main line, and branching distribution lines branch from between the two adjacent switches to respective loads provided scatteringly via other switches and transformers. The two switches on the main line are integrated into a branching unit, and the other switches and the transformers are incorporated in a power package. In the power package, power supply-side and load -side bushings are provided on the top of the transformer, and the load-side bushings are housed in closed boxes respectively. In the closed box for the power supply-side bushing a switch is provided, and further, a distribution board is provided on the side of the transformer. Thereby, the branching distribution lines can be isolated from the main distribution line, and the installation space can be reduced.

The switches are located in a sealed container and to the sealed container via bushings of the transformer. The container is filled with SF₆ gas. The bushings are sealed in the container. The inconvenience of such solution is the necessity of sealing and the problem with the access to the MV switches in a case of the need to replacement of its. The power distribution apparatus is designed as an indoor equipment, which is not applicable as an outdoor device, due to impact of low ambient temperature on the electrical withstand of SF6 gas under pressure.

From European patent No. EP2863053 there is known a single piece electric assembly for connecting an off-shore wind turbine with an electric subsea cable. An electric assembly includes a transformer for transforming a first voltage level provided by at least one wind turbine to a second voltage level of a subsea cable , and an external equipment electrically and mechanically connected to the transformer for controlling an operation at least the transformer. The transformer and the electric equipment are formed by a preinstalled package, which can be mechanically handled as a single piece. The electric assembly solves the problem of reduction an installation labor for the electric assembly.

The unit according to the presented solution comprises the transformer and an external equipment connected together electrically and mechanically. The external equipment comprises an earthing switch and/or electric disconnector which are realized as a gas insulated switchgear. The unit may comprise three surge arresters, electrically connected with the transformer directly or indirectly for achieving an effective protection against overvoltage situation. The unit is not appropriates for switching a short circuit current because in the gas insulated switchgear only disconnector is integrated with the earthing switch. For integration a transformer with the external equipment a special bushings oil-gas under pressure should be used. For connection the subsea cable with a transformer an external pug connectors is used.

As all presented solution have some inconveniences there is a need for improving the power distributed unit having the transformer integrated with the electrical external equipment.

These inconveniences are solved by the subject matter of claims 1. Further advantageous modifications are the subject matter of the sub-claims.

The unit according to the invention has a standard distribution transformer and a MV apparatus unit directly mechanically and electrically connected together. The MV apparatus unit comprises an electric equipment which is placed in a switching box having a housing. The housing is mechanically connected to the transformer through a top part of the frame structure and a bottom wall of the housing. The frame structure is mechanically connected with the base of the transformer in such a way that the top part of the frame structure has a form of an extension arm standing out partially on the top of the transformer and partially beyond an outline of the transformer. The electric equipment is placed in the housing of the switching box in an air surrounding the electrical equipment inside the housing. The electrical equipment comprises: a vacuum circuit breaker, two different types of current transformers, a voltage transformer. The vacuum circuit breaker is electrically and mechanically integrated with the protection current transformer and electrically connected with the autonomous protection relay, placed outside the switching box. The vacuum circuit breaker is also electrically connected through the metering current transformer with three transformer terminals, which terminals are placed in a standard transformer bushings in such a way that after fixing the frame structure to the base of the transformer, the transformer bushings are placed inside the switching box, whereas three input LV terminal bushings of the transformer are situated outside the switching box.

Preferably a third current transformer is placed inside the switching box for earth fault detection in MV cable.

Alternatively a MV air-air bushing is placed in the switching box, connecting electrically the disconnector, the voltage transformer and the fast acting earthing switch with a MV overhead line or an external bus-bar.

Preferably a remote terminal unit box RTU is mechanically connected to the switching box from the external side of the box and it is electrically connected with the metering voltage transformer.

Preferably the unit has an operating mechanism for closing or opening the circuit breaker, and operating mechanisms, the first for closing or opening of disconnector, and the second for closing or opening of fast acting earthing switch, which are fixed to the bottom wall of the housing, outside of the switching box.

Preferably the autonomous protection relay is fixed to the operating mechanism for opening of vacuum circuit breaker in case when a fault occurs in MV network.

Preferably the housing of the switching box has at least one inspection window carried out in the side walls of the housing, for visual observation of a position of main contacts of the disconnector and fast acting earthing switch.

The unit according to invention has a universal and compact design. Any changes in the transformer design are not required and therefore is possible to integrate the switching box with any type standard transformer. Housing of all MV apparatuses of the switch box working close transformer provide its very high reliability and secure against negative affecting i.e. direct impact of icing and low temperatures, and environment pollution. Placing the switch box directly on transformer ensures its remote control, especially when switch-on or switch-off transformer with or without of load even several times within day is expected, for example in order to eliminate generation of losses. This requirements eliminate applied load break switch which has lower electrical endurance and has not possibility to interrupt shot circuit current.

Placing the switching box on the top of the support frame connected with the transformer facilitate the access to the drive mechanism of the MV electrical equipment because the access is possible from outside of the switching box. The switching box filled with the ambient helps in drying process of MV equipment without any additional costs. The inspection windows carried out in the switching box wall facilitate the observation of a position of main contacts of the disconnector and fast acting earthing switch. Placing the metering current transformer inside the switching box makes it possible to measure and transfer energy on commercial level. Thanks to the integration of a disconnector with the fast acting earthing switch and visible insulation gap between the switching box and the transformer, a required level for a high safety is achieved during the exploitation of the unit.

The present invention is presented schematically in the drawing where:

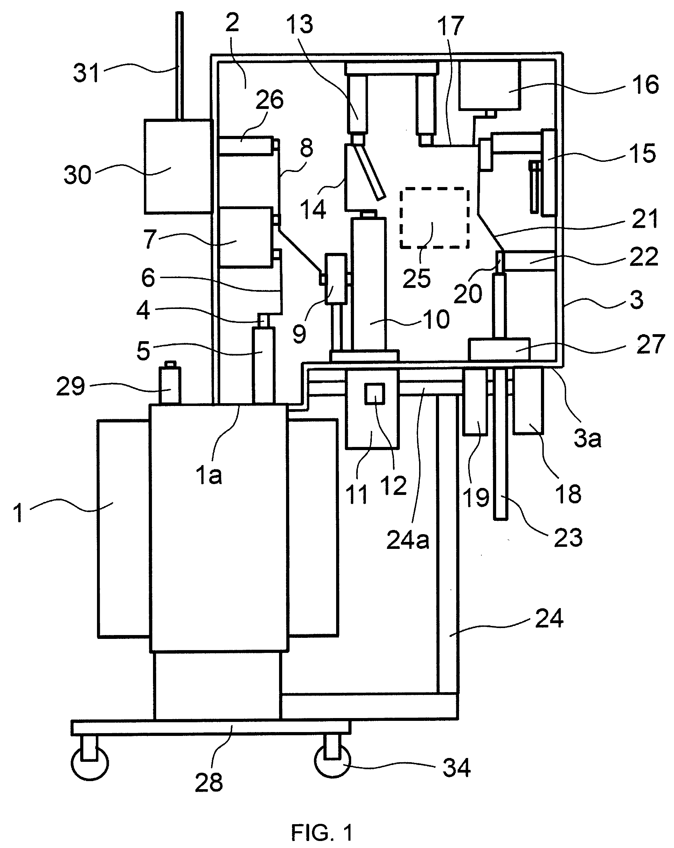

FIG. 1 - shows an inventive unit in the first embodiment for a locally generated energy distributed by a MV cable in a side view,

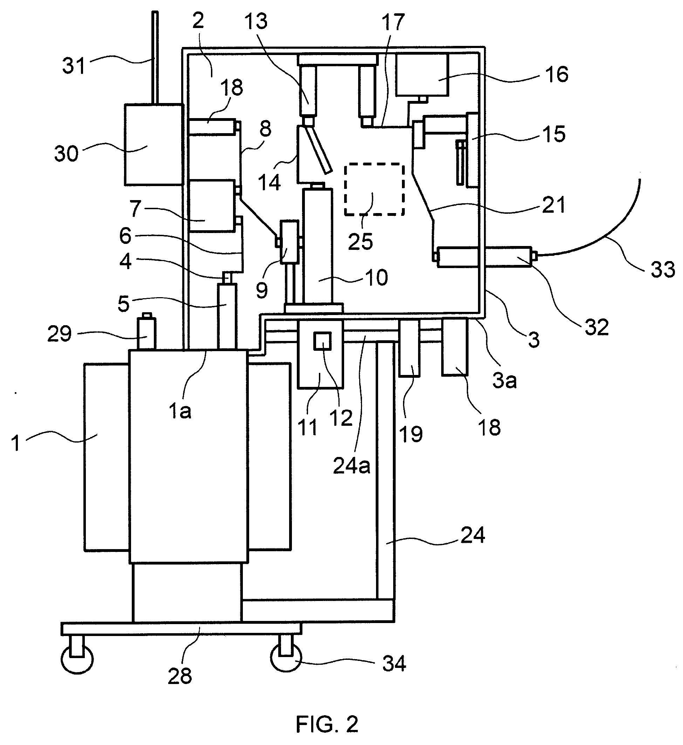

FIG. 2 - shows an inventive unit in the second embodiment for a smart- grid network in a backside view,

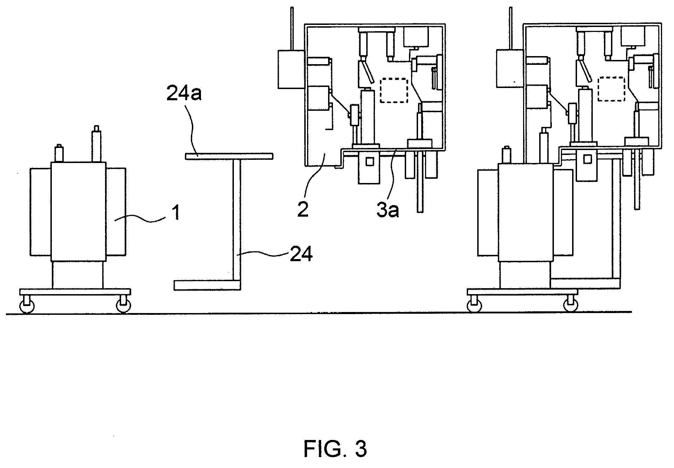

FIG. 3 - schematic of the assembling the unit.

In the first embodiment of the invention, for a locally generated energy distributed by a MV cable, the unit comprises a standard transformer 1 which is electrically connected with an outdoor / indoor switching box 2, having a metallic housing 3, through an electrical connection, formed by a transformer terminals 4 placed in a standard bushings 5 and a MV bus-bars 6 connected transformer terminals 4 and metering current transformer 7. A MV bus-bar 8 connects a metering current transformer 7, designed for a measurement the current, and a protection current transformer 9. The current transformer 9 is integrated mechanically and electrically with the vacuum circuit breaker 10 of switching box 2 . The vacuum breaker 10 is equipped with an operating mechanism 11 for closing or opening the circuit breaker (10) and is manual or motor operated. The operating mechanism 11 has an autonomous protection relay 12 to which a secondary winding of the current transformer 9 is connected. The operating mechanism 11 can open of vacuum circuit breaker 10 in case when fault occurs in MV network generating over current or short circuit current without the need for external power supply to the autonomous protection relay 12. The operating mechanism 11 is fixed outside the box 2 and is protected against icing by a bottom wall 3a of the housing 3, what is important for: reliability; easy access and maintenance. The vacuum circuit breaker 10 is connected with a disconnector 13 through a MV bus-bar 14. The disconnector 13 is connected with a fast acting earthing switch 15 and with a metering voltage transformer 16 through a MV bus-bar 17. The voltage transformer 16 is designed for energy measuring or for detection of voltage loss occurred in case short circuit in MV network. The disconnector 13 is equipped with a first operating mechanism 18 for closing or opening of the disconnector 13, manual or motor operated. The first operating mechanism 18 is placed outside the box 2 and is protected against icing by a bottom wall 3a. The fast acting earthing switch 15 has a second operating mechanism 19 for closing or opening of fast acting earthing switch 15, manual or motor operated. The second operating mechanism is fixed outside the box 2 and is protected against icing by a bottom wall 3a. The fast acting earthing switch 15 is connected with a cable terminal 20 through a MV bus-bar 21. The cable terminal 20 is fixed on support insulator 22 and connected with a cable 23. The electrical equipment of the outdoor / indoor switching box 2 are installed in the metallic housing 3, fixed on the metallic support frame structure 24. The housing 3 has at least one inspection window 25 carried out in the side wall of the housing 3, for visual observation a position of main contacts of the disconnector 13 and fast acting earthing switch 15. Inside the metallic housing 3 the other elements of the switching box 2 are placed such as ZnO arrester 26, fixed to the wall of the housing 3. The MV bus-bar 8 connects ZnO arrester with the metering current transformer 7. The voltage transformer 16 is fixed to the other wall of the housing 3 and is connected through of an MV out bus-bar 17 with the disconnector 13 and with the fast acting earthing switch 15. The MV bus-bar 21 connects the fast acting earthing switch 15 and the MV cable 23. The switching box 2 is equipped with a cable type current transformer 27, placed at the bottom of the terminal 20 for earth fault protection of MV cable 23. The support frame 24 of the housing 3 is mechanically connected with a base frame 28 of the transformer 1. The base frame 28 is designed for guarantee the stability of the switching box 2 and keeping up a top part 24a of the support frame structure 24 above the top part of the transformer 1. The top part 24a of the frame structure 24 has a form of an extension arm standing out partially on the top of the transformer 1 and partially beyond an outline of the transformer 1. The position of switching box 2 above the top of the transformer 1, maintained by support frame structure 24 is arranged in such a way that the busing 5 of the transformer 1 is situated inside the housing 3, and a part of an upper cover 1 a of the transformer 1 has a direct contact with the inside of switching box 2, what enables an efficient transfer of heat from the body of the transformer 1 to the switching box 2, and in an affect enables for drying the insulation of all MV apparatus installed inside the switching box 2. The input LV bushings 29 of the transformer 1 are situated outside the housing 3. The MV bushings 5 of the transformer 1 are fully covered through the housing 3 and therefore protected against icing or pollution. To the outer wall of housing 3 is fixed RTU (Remote Terminal Unit) box 30, which can be powered from voltage transformer 16, what is important for control of MV apparatus such as: vacuum circuit breaker 10, disconnector 13, fast acting earthing switch 15, also in a case of missed auxiliary voltage. RTU box 30 collects and transmits data measured by voltage transformer 16 and current transformer 7. The RTU box 30 is powered by the voltage transformer in a case of a loss of voltage in the external auxiliary circuit. The RTU box is equipped with antenna 31 for wireless connection with the control center. The cable type current transformer 27 is placed at the bottom of the terminal 20 for earth fault protection of MV cable 23. The MV cable terminals are connected with the fast acting earthing switch 15.

In the second embodiment of the invention, for a smart- grid network system, where is required the connection with a MV network through outer bus-bars or overhead lines, - the switching box 2 is devoid of the cable terminal 20 and cable type current transformer 27. Instead, the switching box 2 is equipped with a MV air- air bushings 32, placed in the opening, not presented in the drawing, made in one of the wall of the housing 3 of the switching box 2. The fast acting earthing switch 15 is connected with the air-air busing 32 through a MV bus-bar 21. The MV bushing 32 is installed for integration with MV overhead line or external bus-bar 33.

In the both embodiments of invention the walls the housing 3 are carried out as plates which covering the structure of the box 2 what facilitate the assembling and dissembling of MV apparatuses during manufacture and maintenance of the power unit. The plates can also thermally insulate the equipment in a case of a cold climatic conditions. The transformer 1 may be equipped with the standard rollers 34 allowable for moving the transformer in the place of it's localization at easy way.

In the both embodiments of the invention the switching box 2 is unit is assembled in such a way that the three main components like: standard transformer 1, fully assembled switching box 2 and a support frame 24 are screwed together. The frame 24 is screwed first to the transformer 1 and next the switching box 2 is mounting on the frame 24. Such way of assembling allows for easy transport of all the elements on the place of the installing what limits the transportation costs.

### A list of indication in the drawing

1 - transformer
1a - part of upper cover
2 - switching box
3 - housing
3a - bottom wall of the housing
4 - transformer terminal
5 - standard transformer busing
6- MV bus-bar
7- metering current transformer
8- MV bus-bar
9- protection current transformer
10- vacuum circuit breaker
11- operating mechanism of vacuum circuit breaker
12- autonomous protection relay
13- disconnector
14- MV bus-bar
15- fast acting earthing switch
16- metering voltage transformer
17- out MV bus-bar
18- first operating mechanism of disconnector
19- second operating mechanism of fast acting earthing switch
20- cable terminal
21- MV bus-bar
22- support insulator
23- MV cable
24- metallic support frame structure
24a - a top part of the support frame
25- inspection windows
26- ZnO arrester
27- cable type current transformer
28- base frame of the transformer
29- input LV bushing of the transformer
30- RTU (Remote Terminal Unit) box
31- antenna
32- MV air - air busing
33- MV overhead line or external bus-bar
34- standard rollers

## Claims

1. A multifunctional three phase power distribution indoor/outdoor unit having a transformer (1) and a MV apparatus unit directly mechanically and electrically connected with the transformer (1), where the MV apparatus unit comprises an electric equipment such: a fast acting earthing switch (15); a disconnector (9); three ZnO surge arresters (26) ; and an electric arrangement which is used to connect the electric equipment to the transformer (1), **characterized in that** the electric equipment is placed in a switching box (2) having a housing (3), which housing is mechanically connected to the transformer (1) through a top part (24a) of the frame structure (24) and a bottom wall (3a) of the housing (3), which frame structure (24) is mechanically connected with the base (28) of the transformer (1) in such a way that the top part (24a) of the frame structure (24) has a form of an extension arm standing out partially on the top of the transformer (1) and partially beyond an outline of the transformer (1); and the electric equipment is placed in the housing (3) of the switching box (2) in an air surrounding the electrical equipment inside the housing (3); the electrical equipment comprises: a vacuum circuit breaker (10), two different types of current transformers (7, 9), first (7) for energy metering, second (9) for protection required due to generation of current signal transmitted to the autonomous protection relay (12), a voltage transformer (16) for energy measuring or for detection of voltage loss occurred in case short circuit in MV network; the vacuum circuit breaker (10) is electrically and mechanically integrated with the current transformer (9) and electrically connected with the autonomous protection relay (12) placed outside the switching box (2); and the vacuum circuit breaker (10) is also electrically connected through the metering current transformer (7) with three transformer terminals (4), which terminals are placed in a standard transformer bushings (5) in such a way, that and after fixing the frame (24) to the base (28) of the transformer (1) the transformer bushings (5) are placed inside the switching box (2), whereas three input LV terminal bushings (29) of the transformer (1) are situated outside the switching box (2).

2. A power distribution unit according to claim 1, **characterized in that** it has a third current transformer (27) for earth fault detection in MV cable (23), which is placed inside the switching box (2).

3. A power distribution unit according to claim 1, **characterized in that** a MV air-air bushing (32) is placed in the switching box (2) connecting electrically the disconnector (13), the metering voltage transformer (16) and the fast acting earthing switch (15) with a MV overhead line or an external bus-bar (33).

4. A power distribution unit according to claims 1-3, **characterized in that** a remote terminal unit box RTU (30) is mechanically connected to the switching box (2) from the external side of the box (2) and it is electrically connected with the metering voltage transformer (16).

5. A power distribution unit according to claims 1-5, **characterized in that** it has an operating mechanism (11) for closing or opening the circuit breaker (10); and operating mechanisms (18, 19), the first (18) for closing or opening of disconnector (13), and the second (19) for closing or opening of fast acting earthing switch (15), which are fixed to the bottom wall (3a) of the housing (3) outside of the switching box (2).

6. A power distribution unit according to claim 5, **characterized in that** the autonomous protection relay (12) is fixed to the operating mechanism (11) for opening of vacuum circuit breaker (10) in case when a fault occurs in MV network.

7. A power distribution unit according to any previous claims, **characterized in that** it has at least one inspection window (25) carried out in the side walls of the housing (3), for visual observation of a position of main contacts of the disconnector (13) and fast acting earthing switch (15).
